# FASCICULE DE BREVET EUROPEEN

(11) **EP 3 412 525 B1**
(45) Date de publication et mention de la délivrance du brevet: **11.03.2020**
(21) Numéro de dépôt: 18173748.7
(22) Date de dépôt: 23.05.2018
(51) Int. Cl.: B60S 1/04

(54) **CLÉ DE BLOCAGE D'UNE TIMONERIE, SOUS-ENSEMBLE DE TIMONERIE ET TIMONERIE PRÉSENTANT UNE TELLE CLÉ DE BLOCAGE ET PROCÉDÉ DE MISE EN PLACE D'UNE TELLE CLÉ DE BLOCAGE SUR UNE TIMONERIE**
BLOCKIERSCHLÜSSEL EINES STEUERSTANDS, UNTEREINHEIT EINES STEUERSTANDS UND STEUERSTAND, DER EINEN SOLCHEN BLOCKIERSCHLÜSSEL AUFWEIST, SOWIE VERFAHREN ZUM EINSATZ EINES SOLCHEN BLOCKIERSCHLÜSSELS AUF EINEM STEUERSTAND
LINKAGE LOCKING KEY, LINKAGE SUBASSEMBLY AND LINKAGE HAVING SUCH A LOCKING KEY AND METHOD FOR PLACING SUCH A LOCKING KEY ON A LINKAGE

(30) Priorité: 05.06.2017 FR 1754966
(43) Date de publication de la demande: 12.12.2018
(73) Titulaire: Valeo Systèmes d'Essuyage, 78322 Le Mesnil Saint Denis (FR)
(72) Inventeur: KUCHLY, Nicolas, 63500 ISSOIRE (FR); RENOUX, Pascal, 63500 ISSOIRE (FR); BAUD, Frédéric, 63500 ISSOIRE (FR); VIARD, Robin, 63500 ISSOIRE (FR)
(74) Mandataire: Valeo Systèmes d'Essuyage

(56) Documents cités:
- WO-A1-2008/037691
- DE-A1- 10 313 540
- DE-A1-102009 043 116
- DE-A1-102014 207 287
- DE-A1-102015 216 894

## Description

La présente invention se rapporte au domaine des timoneries des mécanismes d'essuyage, notamment pour véhicules automobiles, et plus particulièrement au blocage de ces timoneries dans une position de transport. Plus spécifiquement, la présente invention se rapporte à une clé de blocage d'une timonerie comprenant au moins une manivelle et au moins une bielle dans une position de transport. La présente invention se rapporte également à un sous-ensemble de timonerie et à une timonerie présentant une telle clé de blocage, et également à un procédé de mise en place d'une telle clé de blocage sur une timonerie.

Les timoneries de mécanisme d'essuyage de véhicules automobiles sont des systèmes articulés en différents endroits. Cette articulation est nécessaire pour le bon fonctionnement du système d'essuyage une fois la timonerie installée sur le véhicule automobile. Cependant, une telle articulation présente des problèmes notamment pour le transport de cette timonerie et pour l'installation de celle-ci sur le véhicule automobile. Ainsi, il est nécessaire de limiter les degrés de liberté de la timonerie aussi bien lors de son transport que lors de son installation.

On connaît des éléments de blocage permettant de relier la bielle à des paliers permettant la fixation de la timonerie sur le véhicule automobile de sorte que la timonerie soit dans une position de transport. Les éléments de blocage connus dans l'état de la technique peuvent se présenter sous différentes formes, comme par exemple sous une forme de pince, afin d'assurer le blocage de cette timonerie dans une position de transport et d'installation, c'est-à-dire une position dans laquelle tout mouvement d'un palier de la timonerie par rapport à la bielle est empêché.

Le document DE 103 13 540 A1 montre une clé de blocage selon le préambule de la première revendication et un sous ensemble d'une timonerie selon le préambule de la 7^{ème} revendication.

Cependant, ces éléments de blocage décrits dans ce document sont à usage unique et sont enlevés par découpe par exemple après installation de la timonerie sur le véhicule automobile. Ainsi, il est nécessaire d'utiliser des outils, généralement coupants, afin de pouvoir libérer la timonerie. Par ailleurs, de tels éléments de blocage génèrent des débris qu'il sera nécessaire de traiter ultérieurement, ce qui engendre des coûts supplémentaires.

La présente invention a pour objectif de pallier au moins partiellement les inconvénients de l'art antérieur exposés ci-dessus.

Un autre objectif de la présente invention, différent de l'objectif précédent, est de proposer un élément de blocage d'une timonerie d'un mécanisme d'essuyage notamment pour véhicule automobile pouvant être retiré sans nécessiter d'outils.

Un autre objectif de la présente invention, différent des objectifs précédents, est de proposer un élément de blocage qui peut rester sur la timonerie du mécanisme d'essuyage, une fois celle-ci installée, de manière à réduire la production de déchets à traiter.

Un autre objectif de la présente invention, différent des objectifs précédents est de proposer un élément de blocage qui est simple d'installation sur une timonerie d'un mécanisme d'essuyage.

Encore un objectif de la présente invention, différent des objectifs précédents, est de proposer un élément de blocage qui permet une libération simple de la timonerie du mécanisme d'essuyage.

A cet effet, afin d'atteindre au moins un des objectifs précités au moins partiellement, la présente invention a pour objet une clé de blocage d'une bielle comportant un profilé en U et d'une manivelle d'une timonerie d'un mécanisme d'essuyage dans une position de transport comprenant :
- un axe présentant à une extrémité une excroissance radiale de préhension et à l'autre extrémité une tête élargie destinée à coopérer avec une partie creuse du profilé en U formant la bielle, et
- un premier doigt radial configuré pour se loger dans une fente de blocage de la bielle dans la position de transport.

La clé de blocage assure le blocage de la timonerie dans la position de transport en bloquant la position relative de la bielle par rapport à la manivelle. Avantageusement, cette clé de blocage est mise en place sans nécessiter d'outils. Par ailleurs, la libération de cette timonerie ne nécessite pas l'utilisation d'outils non plus.

La clé de blocage peut présenter en outre une ou plusieurs des caractéristiques suivantes prises seules ou en combinaison.

La tête élargie présente une forme générale cylindrique dont le diamètre correspond notamment à la distance entre les branches du profilé en U de la bielle.

Le premier doigt radial est porté par la tête élargie.

La clé de blocage comprend en outre un deuxième doigt radial.

Les premier et deuxième doigts radiaux s'étendent par exemple dans la même direction ou dans des directions opposées, c'est-à-dire formant un angle de 180°. Dans une variante les premier et deuxième doigts radiaux s'étendent dans des directions formant un angle non nul, de préférence différent de 90°.

La longueur du premier doigt radial est supérieure à la longueur du deuxième doigt radial.

Selon un mode de réalisation, le deuxième doigt radial est configuré pour coopérer avec un bord de la manivelle disposé en regard de la bielle lorsque la bielle et la manivelle de la timonerie sont dans la position de transport. Toujours selon ce mode de réalisation, la distance axiale entre le premier doigt radial et le deuxième doigt radial correspond à l'épaisseur de la manivelle.

L'excroissance radiale de préhension est décalée angulairement des premier et/ou deuxième doigts radiaux, le décalage angulaire entre l'excroissance radiale de préhension et les premier et/ou deuxième doigts radiaux est en particulier compris entre 30° et 120°, notamment égal à 90°.

L'excroissance radiale de préhension comprend une surface de butée, en particulier une surface supérieure. Selon un mode de réalisation cette surface est notamment destinée à coopérer avec une face de la manivelle opposée à une face disposée en regard de la bielle.

Selon un mode de réalisation, la distance entre la surface de butée de l'excroissance radiale de préhension et le deuxième doigt radial correspond à l'épaisseur de la manivelle.

Selon une variante, la clé de blocage comprend en outre un second premier doigt radial disposé en particulier symétriquement au premier doigt radial par rapport à l'axe et/ou un second deuxième doigt radial disposé en particulier symétriquement au deuxième doigt radial par rapport à l'axe.

Selon une autre variante, la clé de blocage comprend en outre un deuxième doigt radial disposé en particulier au niveau d'une extrémité de la partie de l'excroissance radiale de préhension disposée en regard de la tête élargie, ledit deuxième doigt radial et ladite excroissance radiale de préhension étant configurés pour coopérer avec une face d'un palier disposée à l'opposé d'une face disposée en regard de la bielle.

Selon cette autre variante, le premier doigt radial et le deuxième doigt radial s'étendent notamment dans des directions différentes.

Selon cette autre variante, le premier doigt radial et l'excroissance radiale de préhension s'étendent en particulier dans la même direction.

L'axe de la clé de blocage est notamment de forme cylindrique.

La clé de blocage peut être réalisée en un matériau plastique ou en métal.

La présente invention a également pour objet un sous-ensemble d'une timonerie d'un mécanisme d'essuyage comprenant :
- un palier,
- une manivelle articulée sur le palier, ladite manivelle présentant une première extrémité reliée au palier et une deuxième extrémité portant une liaison rotule, et
- une bielle dont une extrémité est reliée par la liaison rotule à la manivelle,
la manivelle ou la palier présentant une ouverture traversante, notamment allongée, configurée pour recevoir une clé de blocage telle que définie précédemment, et la bielle comportant un profilé en U présentant une fente de blocage destinée à recevoir le premier doigt radial de la clé de blocage.

Le sous-ensemble de timonerie peut comprendre en outre une ou plusieurs des caractéristiques suivantes prises seules ou en combinaison.

Selon un aspect, l'ouverture traversante comporte une première partie destinée à recevoir l'axe de la clé de blocage et une deuxième partie oblongue configurée pour laisser passer l'excroissance radiale de préhension et bloquer le passage du premier doigt radial du fait de sa plus grande longueur.

Selon une variante, l'ouverture traversante est portée par la manivelle et la manivelle peut présenter une première face opposée à celle disposée en regard de la bielle et comprenant deux butées configurées pour coopérer avec au moins une surface de butée de l'excroissance radiale de préhension afin de limiter le mouvement rotatif de la clé de blocage lorsque cette clé de blocage est dans une position de verrouillage.

De manière complémentaire à cette variante, le deuxième doigt radial peut être configuré pour coopérer avec les deux butées lorsque la clé de blocage est dans une position déverrouillée.

Selon un aspect, l'ouverture traversante est disposée à proximité d'un fût permettant l'articulation de la manivelle sur le palier.

Selon un autre aspect, le palier présente un appendice disposé à l'opposé de la liaison rotule lorsque la timonerie est dans la position de transport, l'appendice présentant l'ouverture traversante.

Selon cet autre aspect, l'ouverture traversante présente une troisième partie correspondant à une fente disposée au niveau de la première partie et s'étendant perpendiculairement à cette première partie, ladite troisième partie étant configurée pour permettre la passage du deuxième doigt radial.

Toujours selon cet autre aspect, l'appendice présente un logement disposé sur une face opposée à une face disposée en regard de la bielle, ledit logement étant configuré pour coopérer avec le deuxième doigt radial lorsque la clé de blocage est dans une position déverrouillée, de manière à maintenir cette clé de blocage en place.

La présente invention a également pour objet une timonerie d'un mécanisme d'essuyage comprenant un premier et un deuxième sous-ensembles de timonerie reliés entre eux par une bielle, au moins un des premier et deuxième sous-ensembles de timonerie est un sous-ensemble de timonerie tel que défini précédemment, ledit au moins un des premier et deuxième sous-ensembles de timonerie est agencé pour être bloqué dans la position de transport de la timonerie à l'aide de la clé de blocage.

Selon un mode de réalisation, le premier et le deuxième sous-ensembles de timonerie correspondent au sous-ensemble de timonerie défini précédemment et chaque extrémité de la bielle est bloquée dans la position de transport de la timonerie à l'aide de la clé de blocage.

Avantageusement, la timonerie comprend en outre un moteur relié à au moins une manivelle, ledit moteur étant configuré pour permettre le déplacement en translation de la bielle.

Le moteur est installé d'un deuxième côté de la timonerie.

Le blocage du premier ou du deuxième sous-ensemble de timonerie dans la position de transport de la timonerie à l'aide de la clé de blocage est réversible.

La présente invention a également pour objet un procédé de mise en place dans une position de verrouillage d'une clé de blocage telle que définie précédemment sur un sous-ensemble de timonerie tel que décrit ci-dessus afin de bloquer une timonerie dans la position de transport, le procédé comprenant au moins une des étapes suivantes :
- rotation de la bielle autour de la liaison rotule afin de positionner la timonerie dans la position de transport,
- pression sur la clé de blocage au niveau de l'excroissance radiale de préhension de manière à permettre l'insertion de la tête élargie à l'intérieur du profilé en U de la bielle, et
- rotation de la clé de blocage de manière à ce que le premier doigt radial entre dans la fente de blocage portée par la bielle.

Le procédé de mise en place peut comprendre en outre une ou plusieurs des caractéristiques suivantes prises seules ou en combinaison.

La rotation de la clé de blocage peut se faire dans le sens horaire ou anti-horaire.

Au cours de la dernière étape du procédé de mise en place, la surface de butée de l'excroissance radiale de préhension vient se placer entre les deux butées disposées sur la face de la manivelle opposée à celle en regard de la bielle.

Selon une variante, la manivelle présente l'ouverture traversante destinée à recevoir la clé de blocage et le procédé comprend en outre au moins une des étapes suivantes :
- insertion de la clé de blocage dans la face de la manivelle disposée en regard de la bielle de manière à ce que l'excroissance radiale de préhension fait saillie de la face de la manivelle opposée à celle disposée en regard de la bielle,
- rotation de la clé de blocage à l'intérieur de la manivelle de manière à amener le premier doigt radial au contact de la face de la manivelle en regard de la bielle.

Selon une autre variante, le palier présente l'appendice comportant l'ouverture traversante destinée à recevoir la clé de blocage, et le procédé comprend en outre au moins unes des étapes suivantes :
- insertion de la clé de blocage dans la face de l'appendice disposée en regard de la bielle de manière à ce que l'axe coopère avec la première partie de l'ouverture traversante, que l'excroissance radiale de préhension coopère avec la deuxième partie de l'ouverture traversante, et que le deuxième doigt radial coopère avec la troisième partie de l'ouverture traversante,
- traction sur l'excroissance radiale de préhension en direction opposée à la bielle de manière à amener le premier doigt radial au contact de la face de l'appendice disposée en regard de la bielle.

La libération de la timonerie se fait par rotation de la clé de blocage de sorte que le premier doigt radial sort de la fente de blocage et entre dans le profilé en U, puis par traction de l'excroissance radiale de préhension de manière à amener le premier doigt radial en contact avec la face de la manivelle disposée en regard de la bielle.

Selon un aspect, la libération de la bielle peut comprendre en outre une étape supplémentaire de rotation de la clé de blocage de manière à ce que le deuxième doigt radial coopère avec les butées disposées sur la face de la manivelle opposée à celle en regard de la bielle.

Selon un autre aspect, la libération de la bielle peut comprendre en outre une étape supplémentaire de rotation de la clé de blocage de manière à ce que le deuxième doigt radial coopère avec le logement de l'appendice.

Selon une première variante de libération, la clé de blocage reste sur la manivelle après libération de la timonerie.

Selon une deuxième variante de libération, la clé de blocage reste sur l'appendice après libération de la timonerie.

Selon une troisième variante de libération, la clé de blocage est retirée de la manivelle ou de l'appendice après libération de la timonerie.

Avantageusement, une clé de blocage selon l'invention est installée du premier côté et une clé de blocage selon l'invention est installée du deuxième côté de la timonerie.

D'autres caractéristiques et avantages de la présente invention apparaîtront plus clairement à la lecture de la description suivante, donnée à titre illustratif et non-limitatif, et des dessins annexés dans lesquels :
- la figure 1 est une représentation schématique en perspective d'une timonerie bloquée dans une position de transport à l'aide d'une clé de blocage selon l'invention,
- la figure 2A est une représentation schématique en perspective d'un sous-ensemble de timonerie présentant une clé de blocage selon un premier mode de réalisation,
- la figure 2B est une représentation schématique en perspective d'un sous-ensemble de timonerie présentant une clé de blocage selon un deuxième mode de réalisation,
- la figure 3 est une représentation schématique en perspective d'un sous-ensemble de timonerie présentant plus en détail une portion de bielle,
- la figure 4 est une représentation schématique en perspective d'un sous-ensemble de timonerie présentant plus en détail une manivelle,
- la figure 5A est une représentation schématique en perspective d'une face de la manivelle de la figure 4 selon un premier mode de réalisation,
- la figure 5B est une représentation schématique en perspective d'une face de la manivelle de la figure 4 selon un deuxième mode de réalisation,
- la figure 6 est une représentation schématique en perspective d'un palier présentant un appendice comportant une ouverture traversante destinée à coopérer avec une clé de blocage,
- la figure 7A est une représentation schématique latérale d'une clé de blocage selon un premier mode de réalisation,
- la figure 7B est une représentation schématique de dessus de la clé de blocage de la figure 7A,
- la figure 8 est une représentation schématique latérale d'une clé de blocage selon un deuxième mode de réalisation,
- la figure 9 est une représentation schématique latérale en perspective d'une clé de blocage selon un troisième mode de réalisation,
- les figures 10A à 10D illustrent différentes vues schématiquement d'un sous-ensemble de timonerie coopérant avec une clé de blocage selon un premier mode de réalisation de l'invention.
- les figures 11A et 11B sont des représentations schématiques en perspective du sous-ensemble de timonerie des figures 10A-D bloqué dans la position de transport,
- les figures 12A à 12D sont des représentations schématiques d'un sous-ensemble de timonerie selon un deuxième mode de réalisation,
- la figure 13A est une autre représentation schématique en perspective du sous-ensemble de timonerie des figures 12A-D,
- la figure 13B est une représentation schématique en perspective en contre-plongée du sous-ensemble de timonerie de la figure 13A, et en particulier de l'appendice,
- la figure 14A est une représentation schématique partielle en perspective d'une timonerie selon le premier mode de réalisation installée sur un véhicule automobile, et
- la figure 14B est une représentation schématique partielle en perspective d'une timonerie selon le deuxième mode de réalisation installée sur un véhicule automobile.

Sur ces figures, les éléments identiques portent les mêmes références numériques.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations.

Dans la description suivante, il est fait référence à un premier, et à un deuxième, doigts radiaux, à une première et à une deuxième extrémités de la manivelle, à une première et à une deuxième faces de la manivelle, à une première, à une deuxième, et à une troisième parties de l'ouverture traversante, à un premier et à un deuxième sous-ensembles de timonerie, à un premier et à un deuxième côtés de la timonerie, à une première et à une deuxième parties oblongues de l'ouverture traversante, et à une première et une deuxième faces de l'appendice. Il s'agit d'un simple indexage pour différencier et dénommer des éléments proches mais non identiques. Cette indexation n'implique pas une priorité d'un élément par rapport à un autre et on peut aisément interchanger de telles dénominations sans sortir du cadre de la présente description. Cette indexation n'implique pas non plus un ordre dans le temps par exemple pour apprécier la disposition de la timonerie sur le véhicule automobile, son fonctionnement, ou encore son installation, ou encore pour apprécier la forme de la clé de blocage ou son installation sur la timonerie afin de maintenir celle-ci dans la position de transport.

Dans la description suivante, on entend notamment par « position de transport », une position dans laquelle au moins une extrémité de la bielle et une manivelle à laquelle est reliée cette extrémité de la bielle forment un angle minimal. Plus précisément, au moins cette extrémité de la bielle se trouve dans une position rapprochée du palier sur lequel la manivelle est articulée de sorte que la timonerie présente un encombrement minimal lorsqu'elle se trouve dans la position de transport.

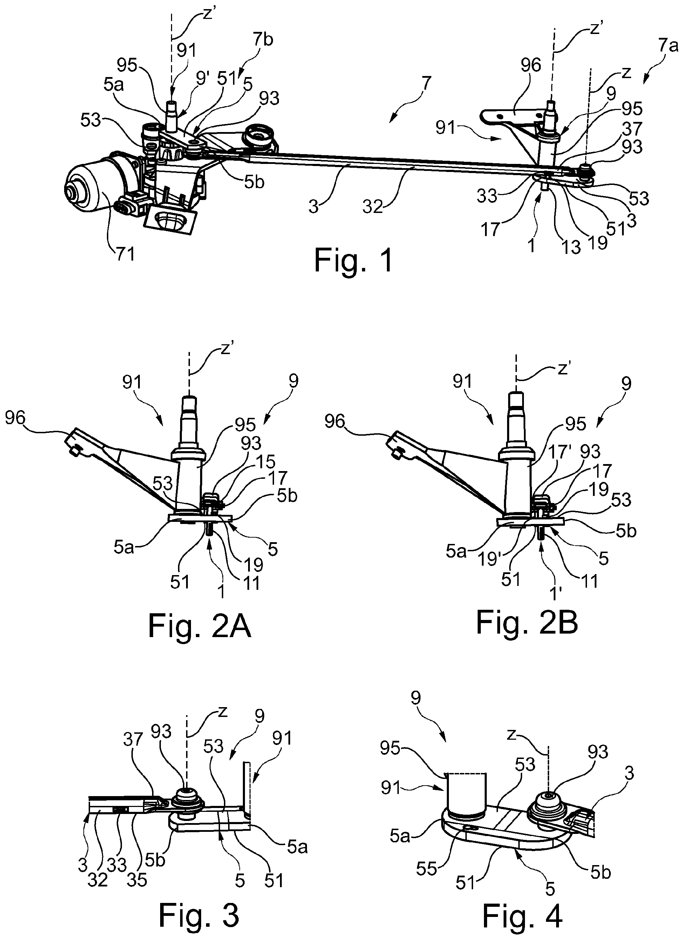

En référence à la figure 1, il est représenté une timonerie 7 d'un mécanisme d'essuyage d'un véhicule automobile. La timonerie 7 comprend un premier sous-ensemble de timonerie 9 (mieux visible sur les figures 2A à 6) disposé d'un premier côté 7a de la timonerie 7, un deuxième sous-ensemble de timonerie 9' disposé d'un deuxième côté 7b de la timonerie 7, et en outre un moteur 71 configuré pour permettre le déplacement en translation d'une bielle 3 reliant le premier 9 et le deuxième 9' sous-ensembles de timonerie et animer selon un mouvement alternatif de pivotement des axes Z' destinés à porter des bras balai (non représentés).

Les premier 9 et deuxième 9' sous-ensembles de timonerie comprennent un palier 91 et une manivelle 5 articulée sur le palier 91.

La manivelle 5 présente une première extrémité 5a reliée au palier 91 par une liaison pivot par exemple et une deuxième extrémité 5b portant une liaison rotule 93 sur laquelle la bielle 3 est articulée au niveau d'une extrémité 37 notamment selon un axe de rotation Z.

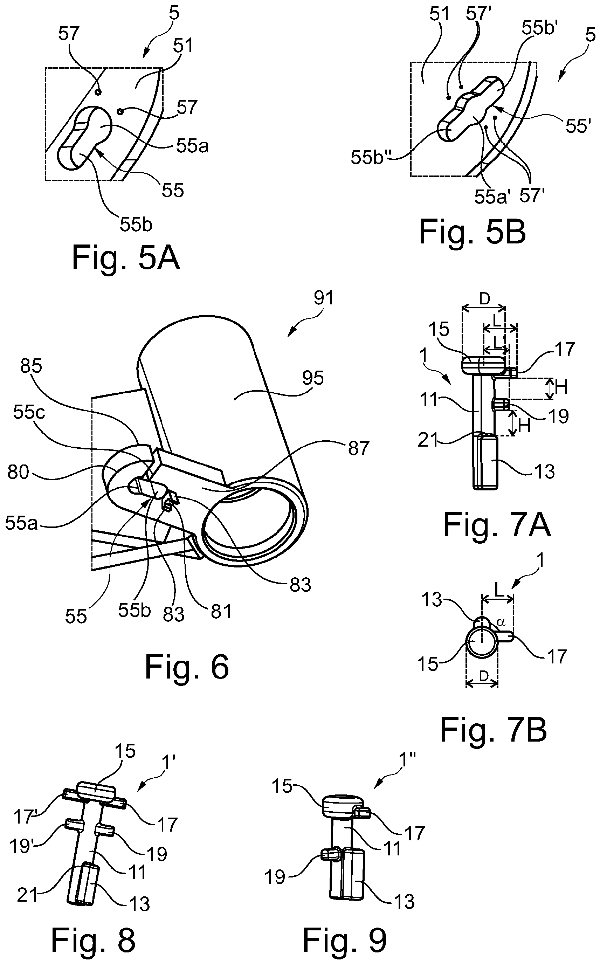

Par ailleurs, la bielle 3 est réalisée par un profilé en U présentant des branches 32 délimitant une partie creuse disposée en regard de la manivelle 5. La partie creuse du profilé en U est destinée à recevoir une tête élargie 15 d'une clé de blocage 1 (visible sur les figures 7A à 9). La clé de blocage 1 ainsi disposée permet de bloquer l'articulation de la bielle 3 sur la liaison rotule 93 selon l'axe de rotation Z.

Selon le mode de réalisation particulier de la figure 1, la timonerie 7 est bloquée dans une position de transport. Plus particulièrement, la rotation selon l'axe Z de l'extrémité 37 de la bielle 3 sur la liaison rotule 93 portée par le premier sous-ensemble de timonerie 9 est bloquée. Selon ce mode de réalisation, la bielle 3 correspond à un profilé en U et présente dans au moins une branche 32 une fente de blocage 33 disposée au niveau de l'extrémité 37 de la bielle 3. Afin de stabiliser la clé de blocage 1 dans une position de verrouillage et de bloquer la timonerie 7 dans sa position de transport, la clé de blocage 1 présente un premier doigt radial 17 (visible en particulier sur les figures 7A à 9) destiné à coopérer avec la fente de blocage 33 lorsque la timonerie 7 est maintenue dans la position de transport. La coopération du premier doigt radial 17 avec la fente de blocage 33 permet de maintenir fixe la position relative de la bielle 3 par rapport à la manivelle 5 selon les différentes directions dans lesquelles la bielle 3 peut être articulée sur la liaison rotule 93.

Selon le mode de réalisation particulier de la figure 1, le moteur 71 est disposé au niveau du deuxième côté 7b de la timonerie 7. Le deuxième côté 7b de la timonerie 7 correspond généralement au côté conducteur lorsque la timonerie 7 est installée sur un véhicule automobile. Selon une variante, le deuxième côté 7b peut correspondre au côté passager du véhicule automobile une fois la timonerie 7 installée sur celui-ci. Par ailleurs, le moteur 71 est relié à au moins une manivelle 5, afin de permettre le déplacement en translation de la bielle 3.

Selon le mode de réalisation particulier de la figure 1, la clé de blocage 1 est disposée au niveau du premier sous-ensemble de timonerie 9 qui correspond au premier côté 7a de la timonerie 7 afin de bloquer cette extrémité 37 de la bielle 3 dans la position de transport.

Selon un autre mode de réalisation non représenté ici, le premier 9 et le deuxième 9' sous-ensembles de timonerie peuvent être similaires et comporter chacun une clé de blocage 1 afin de bloquer le premier 7a et le deuxième 7b côtés de la timonerie 7 de manière à maintenir chaque extrémité de la bielle 3 fixe par rapport aux paliers 91 des premier 9 et deuxième 9' sous-ensembles de timonerie.

Selon un autre mode de réalisation particulier, le premier sous-ensemble de timonerie 9 comportant la clé de blocage 1 peut correspondre au sous-ensemble de timonerie 9 disposé du deuxième côté 7b de la timonerie 7.

Selon encore un autre mode de réalisation non représenté ici, seulement le deuxième sous-ensemble de timonerie 9' présente la clé de blocage 1. Ainsi, seule l'extrémité 37 de la bielle 3 reliée à ce deuxième sous-ensemble de timonerie 9' est bloquée dans la position de transport de la timonerie 7.

Avantageusement, le blocage de l'articulation de la bielle 3 sur la liaison rotule 93 permet de faciliter le transport de cette timonerie 7 en enlevant des degrés de liberté de mouvement de certaines pièces de la timonerie 7. De plus, le transport de cette timonerie 7 est également facilité car celle-ci présente un encombrement minimal. Par ailleurs, le blocage de cette articulation permet également de faciliter l'installation de cette timonerie 7 sur le véhicule automobile en bloquant l'articulation de la bielle 3 sur les liaisons rotule 93 portées par chacune des manivelles 5.

En référence aux figures 2A, 3 à 5A, 7A et 7B, sont montrés plus en détail les éléments de la timonerie 7 (figures 2A et 3 à 5A) coopérant avec une clé de blocage 1 (figures 7A et 7B) ainsi que les détails de la clé de blocage 1 selon un premier mode de réalisation.

En référence aux figures 4 et 5A, la manivelle 5 présente une première face 51 opposée à une deuxième face 53 disposée en regard de la bielle 3. La manivelle 5 présente une ouverture traversante 55 configurée pour recevoir la clé de blocage 1 (mieux visible sur les figures 7A et 7B). L'ouverture traversante 55 dans la manivelle 5 est allongée et est disposée à proximité d'un fût 95 permettant l'articulation de la manivelle 5 sur le palier 91. Un telle disposition permet, en plus de bloquer le mouvement de la bielle 3 sur la liaison rotule 93, de maintenir la bielle 3 dans une position relative fixe par rapport au fût 95 lorsque la timonerie 7 est dans la position de transport.

En référence à la figure 3, la bielle 3 présente la fente de blocage 33 disposée au niveau d'une paroi 32 du profilé en U formant la bielle 3. Cette fente de blocage 33 est configurée pour coopérer avec le premier doigt radial 17 de la clé de blocage 1.

Dans les différents modes de réalisation illustrés, en particulier en référence aux figures 7A et 7B, la clé de blocage 1 comprend un axe 11, et un premier doigt radial 17.

L'axe 11 présente à une extrémité une excroissance radiale de préhension 13 et à l'autre extrémité la tête élargie 15 destinée à coopérer avec la partie creuse du profilé en U formant la bielle 3. La tête élargie 15 présente notamment une forme générale cylindrique dont le diamètre D correspond à la distance entre les branches 32 du profilé en U de la bielle 3. Le diamètre D de la tête élargie 15 est par ailleurs supérieur à au moins une dimension de l'ouverture traversante 55. Par ailleurs, l'excroissance radiale de préhension 13 est configurée pour passer à travers l'ouverture traversante 55 afin de permettre le positionnement de la clé de blocage 1 à l'intérieur de cette ouverture traversante 55. Ainsi, le passage de la clé de blocage 1 à travers l'ouverture traversante 55 est prévenu.

Selon le mode de réalisation particulier des figures 7A et 7B, la clé de blocage 1 est réalisée par exemple par moulage par injection et d'une seule pièce en un matériau plastique. Selon un autre mode de réalisation non représenté ici, la clé de blocage 1 peut être réalisée en métal.

Par ailleurs, la clé de blocage 1 comprend en outre un deuxième doigt radial 19 configuré pour coopérer avec la deuxième face 53 de la manivelle 5 qui est en regard de la bielle 3, lorsque la bielle 3 et la manivelle 5 de la timonerie 7 sont dans la position de transport. D'autre part, selon ce mode de réalisation particulier l'axe 11 de la clé de blocage 1 présente une forme cylindrique. L'utilisation d'une forme cylindrique pour l'axe 11 permet d'améliorer la coopération de cet axe 11 avec l'ouverture traversante 55 et également de faciliter la rotation de la clé de blocage 1 à l'intérieur de cette ouverture traversante 55.

Selon une variante, l'axe 11 peut présenter une section d'un polygone régulier notamment avec au moins 5 côtés.

Le premier doigt radial 17 est positionné par exemple proche de la tête élargie 15 et est destiné à se loger dans la fente de blocage 33 de la bielle 3 dans la position de transport. Le deuxième doigt radial 19 est destiné à coopérer, et plus précisément à être en contact, avec la deuxième face 53 de la manivelle 5 lorsque la clé de blocage 1 est dans une position relevée de transport. Selon le mode de réalisation particulier des figures 7A et 7B, les premier 17 et deuxième 19 doigts radiaux s'étendent dans la même direction et sont donc alignés angulairement. De plus, la longueur L du premier doigt radial 17 est supérieure à la longueur L' du deuxième doigt radial 19.

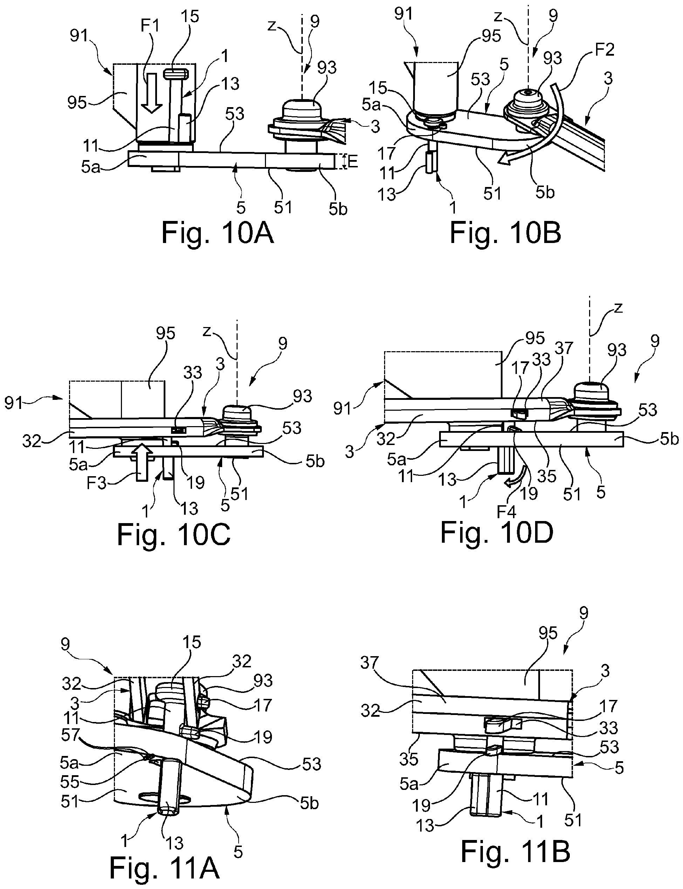

Par ailleurs, les premier 17 et deuxième 19 doigts radiaux sont espacés d'une hauteur H qui correspond à une épaisseur E de la manivelle 5 (visible sur la figure 10A). Cette épaisseur E correspond à l'épaisseur E entre la première 51 et la deuxième 53 faces de la manivelle 5. D'autre part, l'excroissance radiale de préhension 13 est décalée angulairement des premier 17 et deuxième 19 doigts radiaux. Plus particulièrement, le décalage angulaire α entre l'excroissance radiale de préhension 13 et les premier 17 et deuxième 19 doigts radiaux est compris entre 30° et 60°, et selon le mode de réalisation préféré de la figure 7B égal à 45°. Par ailleurs, la distance entre la partie supérieure de l'excroissance radiale de préhension 13, disposée à l'opposé de l'extrémité de la clé de blocage 1 et le deuxième doigt radial 19 correspond également à l'épaisseur E de la manivelle 5. Ainsi, lorsque la clé de blocage 1 est en position de verrouillage, la position relative de la bielle 3 par rapport à la manivelle 5 est maintenue fixe. En effet, la clé de blocage 1 relie l'extrémité 37 de la bielle 3 à la manivelle 5 afin de maintenir la position relative de l'extrémité 37 de la bielle 3 fixe par rapport au palier 91, et plus précisément par rapport à la première extrémité 5a de la manivelle 5.

En référence aux figures 5A, 7A et 7B, l'ouverture traversante 55 de la manivelle 5 selon ce premier mode de réalisation comporte une première partie 55a destinée à recevoir l'axe 11 de la clé de blocage 1 et une deuxième partie 55b oblongue configurée pour laisser passer le second doigt radial 19 et bloquer le passage du premier doigt radial 17 du fait de sa plus grande longueur L. L'ouverture traversante 55 présente donc une forme de trou de serrure. Par ailleurs, l'excroissance radiale de préhension 13 comprend une surface de butée 21 destinée à coopérer avec la première face 51 de la manivelle 5. Selon ce mode de réalisation particulier, la première face 51 de la manivelle 5 comprend deux butées 57 configurées pour coopérer avec la surface de butée 21 afin de limiter le mouvement rotatif de la clé de blocage 1 lorsque cette clé de blocage 1 est dans sa position de verrouillage dans laquelle la clé de blocage 1 maintien la timonerie 7 dans la position de transport. Par ailleurs, ces butées 57 peuvent également être configurées pour coopérer avec le deuxième doigt radial 19 lorsque la clé de blocage 1 est dans une position déverrouillée afin de maintenir la clé de blocage 1 dans cette position déverrouillée. Selon ce premier mode de réalisation, la position de verrouillage de la clé de blocage 1 peut correspondre à une position relevée de la tête élargie 15 par rapport à la deuxième face 53 de la manivelle 5 et la position déverrouillée de la clé de blocage 1 peut correspondre à une position abaissée de la clé de blocage dans laquelle le premier doigt radial 17 peut être en contact avec la deuxième face 53 de la manivelle 5 par exemple.

En référence aux figures 2B, 5B et 8, il est représenté un sous-ensemble de timonerie 9 présentant une clé de blocage 1' bloquant la timonerie 7 dans la position de transport selon un deuxième mode de réalisation.

Selon ce deuxième mode de réalisation, la bielle 3 présente deux fentes de blocage 33 disposées l'une en face de l'autre sur chacune des parois 32 du profilé en U. En référence à la figure 8, la clé de blocage 1' comprend en outre un second premier doigt radial 17' disposé symétriquement au premier doigt radial 17 par rapport à l'axe 11 et un second deuxième doigt radial 19' disposé symétriquement au deuxième doigt radial 19 par rapport à l'axe 11. Selon ce deuxième mode de réalisation, le premier 17 et le troisième 17' doigts radiaux coopèrent chacun avec une fente de blocage 33.

En référence à la figure 5B, la forme de l'ouverture traversante 55' est adaptée de manière à permettre le passage de l'axe 11 de la clé de blocage 1' et des deuxième 19 et second deuxième 19' doigts radiaux. L'ouverture traversante 55' peut par exemple présenter une forme d'hélice à deux pales par exemple présentant un centre de forme circulaire 55a' et une première 55b' et une deuxième 55b" parties oblongues de l'ouverture traversante 55'. Par ailleurs, la première face 51 de la manivelle présente également des butées 57' destinées à coopérer avec les deuxième 19 et second deuxième 19' doigts radiaux lorsque la clé de blocage 1' est dans sa position déverrouillée.

Selon une autre variante non représentée ici, la clé de blocage 1 peut présenter uniquement les premier 17, deuxième 19, et troisième 17' doigts radiaux. Selon cette variante, la forme de l'ouverture traversante 55 peut rester identique à celle de la figure 5A.

En référence à la figure 6, il est représenté un palier 91 destiné à coopérer avec une clé de blocage 1" en référence à la figure 9 afin de maintenir la timonerie 7 de la figure 1 dans la position de transport selon un troisième mode de réalisation.

En référence à la figure 6, le palier 91 présente un appendice 80 disposé au niveau de la partie du fût 95 permettant la liaison avec la manivelle 5. L'appendice 80 présente une première face 85 disposée en regard de la bielle 3 lorsque la timonerie 7 est dans la position de transport et une deuxième face 87 opposée à cette première face 85. Par ailleurs, l'appendice 80 est disposé à l'opposé de la liaison rotule 93 lorsque la timonerie 7 est dans la position de transport. L'appendice 80 présente l'ouverture traversante 55 destinée à coopérer avec la clé de blocage 1".

Selon ce troisième mode de réalisation, l'ouverture traversante 55 présente la première partie 55a destinée à recevoir l'axe 11 de la clé de blocage 1" et la deuxième partie 55b oblongue. L'ouverture traversante 55 présente en outre une troisième partie 55c correspondant à une fente disposée au niveau de la première partie 55a et s'étendant perpendiculairement à la première partie 55a, et plus particulièrement perpendiculairement à l'axe de l'ouverture oblongue de la deuxième partie 55b. Cette troisième partie 55c de l'ouverture traversante 55 est configurée pour permettre le passage du deuxième doigt radial 19 de la clé de blocage 1" afin de faciliter son positionnement dans l'ouverture traversante 55.

Par ailleurs, la deuxième face 87 de l'appendice 80 présente un logement 81 configuré pour coopérer avec le deuxième doigt radial 19 de la clé de blocage 1" lorsque celle-ci est dans sa position déverrouillée notamment afin de la maintenir en place au niveau de l'ouverture traversante 55. A cet effet, le logement 81 présente deux pattes 83 disposées de part et d'autre de celui-ci. La distance entre ces deux pattes 83 est au moins égale à la largeur du deuxième doigt radial 19.

En référence à la figure 9, la clé de blocage 1" selon ce troisième mode de réalisation présente le premier doigt radial 17 porté par la tête élargie 15. Par ailleurs, le deuxième doigt radial 19 est disposé au niveau d'une extrémité de l'excroissance radiale de préhension 13 disposée en regard de la tête élargie 15. Selon ce troisième mode de réalisation, le deuxième doigt radial 19 et l'extrémité de l'excroissance radiale de préhension 13 portant le deuxième doigt radial 19 sont configurés pour coopérer avec la deuxième face 87 de l'appendice 80. Selon ce troisième mode de réalisation, le premier doigt radial 17 et le deuxième doigt radial 19 s'étendent selon des directions différentes. Par ailleurs, le premier doigt radial 17 et l'excroissance radiale de préhension 13 s'étendent dans la même direction.

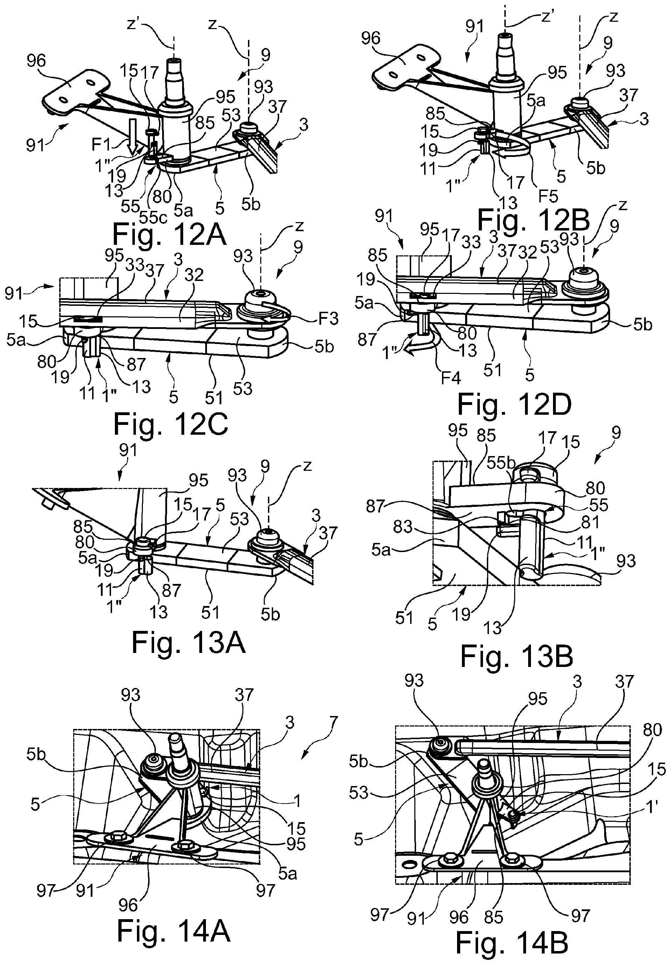

En référence aux figures 10A à 10D et 12A à 12D, il est représenté un procédé de mise en place dans une position de verrouillage de la clé de blocage 1 sur le sous-ensemble de timonerie 9 afin de bloquer au moins une extrémité 37 de la bielle 3 de la timonerie 7 dans la position de transport.

En référence aux figures 10B et 12B, le procédé met en œuvre une étape a de rotation de la bielle 3. La rotation autour de la liaison rotule 93 se fait dans l'exemple illustré selon la flèche F2. La rotation permet de positionner la timonerie 7 dans sa position de transport, et plus précisément afin d'amener la partie creuse du profilé en U de la bielle en regard de la tête élargie 15 de la clé de blocage 1.

En référence à la figure 10C, le procédé peut ensuite mettre en œuvre une étape b de pression sur la clé de blocage 1. La pression au niveau de l'excroissance radiale de préhension 13 s'effectue, illustrée selon la flèche F3, de manière à permettre l'insertion de la tête élargie 15 à l'intérieur du profilé en U entre les parois 32 de la bielle 3. Une fois la clé de blocage 1 insérée entre les parois 32 de la bielle 3, l'articulation de celle-ci sur la liaison rotule 93 selon l'axe de rotation Z est bloquée.

En référence aux figures 10D et 12D, afin de maintenir la clé de blocage 1 en place, le procédé met en œuvre une étape c de rotation de la clé de blocage 1. Dans l'exemple illustré cette étape est effectuée selon la flèche F4 de manière à ce que le premier doigt radial 17 entre dans la fente de blocage 33 portée par la bielle 3. Lors de cette étape c, la rotation de la clé de blocage 1 peut se faire dans le sens horaire ou dans le sens anti-horaire. Cette étape c de rotation de la clé de blocage 1 permet de maintenir la position relative de la bielle 3 fixe par rapport à la première extrémité 5a de la manivelle 5 par exemple.

Selon le mode de réalisation particulier des figures 10C à 11A, 12C et 12D, la tête élargie 15 présente un diamètre D (visible sur les figures 7A et 7B) sensiblement égal à la distance séparant les parois 32 du profilé en U formant la bielle 3. De plus, le premier doigt radial 17 fait saillie dans la fente de blocage 33 de manière à ce que la position relative de la bielle 3 par rapport au fût 95 est fixe jusqu'à ce que la bielle 3 soit libérée afin de permettre à la timonerie 7 de quitter sa position de transport.

Ainsi le blocage de la timonerie 7 en position de transport ne nécessite l'utilisation d'aucun outil.

En référence aux figures 10A à 10D, il est représenté la mise en place dans une position de verrouillage de la clé de blocage 1 selon un premier mode de réalisation. Selon ce premier mode de réalisation, la clé de blocage 1 correspond à la la clé de blocage 1 décrite en référence aux figures 7A et 7B et est installée dans l'ouverture traversante 55 portée par la manivelle 5 décrite en référence aux figures 4 et 5A.

En référence à la figure 10A, le procédé peut comprendre en outre une étape a'1 d'insertion de la clé de blocage 1 dans la deuxième face 53 de la manivelle 5 disposée en regard de la bielle 3 selon la flèche F1 de manière à ce que l'excroissance radiale de préhension 13 fait saillie de la première face 51 de la manivelle 5. Au cours de cette étape a'1, la clé de blocage 1 est insérée dans l'ouverture traversante 55 jusqu'à ce que le deuxième doigt radial 19 soit en contact avec la deuxième face 53 de la manivelle 5. Ainsi, la distance entre la surface de butée 21 de l'excroissance radiale de préhension 13 et le deuxième doigt radial 19 est au moins égale à l'épaisseur E de la manivelle 5, et de manière préférée égale à l'épaisseur E de la manivelle 5.

Le procédé peut ensuite mettre en œuvre une étape a'2 de rotation de la clé de blocage 1 à l'intérieur l'ouverture traversante 55 de la manivelle 5 de manière à placer le deuxième doigt radial 19 en regard de la deuxième partie 55b de l'ouverture traversante 55 afin d'amener le premier doigt radial 17 au contact de la deuxième face 53 de la manivelle 5. En effet, la deuxième partie 55b de l'ouverture traversante 55 présente des dimensions permettant uniquement le passage du deuxième doigt radial 19 à travers celle-ci, mais bloquant le passage du premier doigt radial 17 du fait de sa plus grande longueur L.

Lors de l'étape c de rotation de la clé de blocage 1 de manière à ce que le premier doigt radial 17 entre dans la fente de blocage 33, le deuxième doigt radial 19 est orienté selon une direction sensiblement perpendiculaire à la longueur de la deuxième partie 55b de l'ouverture traversante 55. D'autre part, lors de cette étape, et de manière optionnelle, la surface de butée 21 de la clé de blocage 1 peut venir s'insérer entre les deux butées 57 portées par la première face 51 à proximité de la première extrémité 5a de la manivelle 5. Par ailleurs, en référence aux figures 10D à 11B, une surface du deuxième doigt radial 19 disposée à l'opposée d'une surface en regard du premier doigt radial 17 est en contact avec la deuxième face 53 de la manivelle 5 afin de renforcer le blocage de la timonerie 7 dans la position de transport. Par ailleurs, selon le mode de réalisation particulier des figures 11A et 11B, la distance entre la surface de butée 21 de l'excroissance radiale de préhension 13 et le deuxième doigt 19 est égale à l'épaisseur E de la manivelle 5. Ainsi, en position de verrouillage, la clé de blocage 1 maintient fixe la position relative de la bielle 3 par rapport à la manivelle 5 aussi bien selon l'axe de rotation Z de la liaison rotule 93 que l'espacement entre la deuxième face 53 de la manivelle 5 et la bielle 3.

En référence aux figures 12A à 12D, il est représenté un procédé de mise en place dans une position de verrouillage de la clé de blocage 1 selon un deuxième mode de réalisation. Selon ce deuxième mode de réalisation, la clé de blocage 1 correspond à la clé de blocage 1" décrite en référence à la figure 9 insérée dans l'ouverture traversante 55 portée par l'appendice 80 du palier 91 décrit en référence à la figure 6.

En référence à la figure 12A, le procédé comprend en outre une étape a"1 d'insertion de la clé de blocage 1 dans la première face 85 de l'appendice 80. Cette étape a"1 de la clé de blocage 1 se fait selon la flèche F1 de manière à ce que l'axe 11 coopère avec la première partie 55a de l'ouverture traversante 55, que l'excroissance radiale de préhension 13 coopère avec la deuxième partie 55b oblongue de l'ouverture traversante 55, et que le deuxième doigt radial 19 coopère avec la troisième partie 55c de l'ouverture traversante 55. Le procédé peut également comprendre une étape a"2 de traction sur l'excroissance radiale de préhension 13 en direction opposée à la bielle 3 de manière à amener le premier doigt radial 17 au contact de la première face 85 de l'appendice 80.

Selon ce deuxième mode de réalisation, l'appendice 80 est disposé au niveau du fût 95 de manière à ce que la surface du profilé en U de la bielle 3 disposée en regard de la première face 85 puisse venir au contact de cette première face 85 comme illustré en référence à la figure 12C. Ainsi, le blocage de cette bielle 3 est possible par rotation de la clé de blocage 1 de manière à ce que le premier doigt radial 17 entre dans la fente de blocage 33. La figure 12C est une représentation schématique du sous-ensemble de timonerie au cours de l'étape de rotation d'une bielle de manière à placer le sous ensemble de timonerie dans une position de transport.

Les premier et deuxième procédés de blocage de la bielle 3 peuvent être mis en œuvre avec les clés de blocage 1, 1', 1" décrites selon les premier, deuxième et troisième modes de réalisation ainsi qu'avec une ouverture traversante 55 correspondante disposée aussi bien dans la manivelle 5 que sur l'appendice 80.

En référence aux figures 11A, 11B, 13A et 13B, la libération de la timonerie 7 se fait par rotation de la clé de blocage 1 de sorte que le premier doigt radial 17 sort de la fente 33 de blocage et rentre dans le profilé en U.

En référence aux figures 11A et 11B, il est représenté un premier mode de libération de la timonerie 7. Selon ce premier mode de libération, le deuxième doigt radial 19 est disposé en regard de la deuxième partie 55b de l'ouverture traversante 55 lors de la rotation de la clé de blocage 1. La tête élargie 15 de la clé de blocage 1 peut ensuite être retirée du profilé en U par traction sur l'excroissance radiale de préhension 13 dans une direction opposée à celle de la bielle 3 de manière à amener le premier doigt radial 17 en contact avec la deuxième face 53 de la manivelle 5 et de permettre le passage du deuxième doigt radial 19 à travers la deuxième partie 55b oblongue de l'ouverture traversante 55. Ainsi, la clé de blocage 1 revient en position déverrouillée comme représentée en référence à la figure 10B. De manière optionnelle, la libération de la bielle 3 peut comprendre une étape supplémentaire de rotation de la clé de blocage 1 de manière à insérer le deuxième doigt radial 19 entre les butées 57 (visibles sur les figures 5A et 5B) disposées sur la première face 51 de la manivelle 5. Avantageusement, cette étape supplémentaire permet de maintenir en place la clé de blocage 1 en position déverrouillée car la distance H entre les premier 17 et deuxième 19 doigts radiaux est égale à l'épaisseur E de la manivelle 5.

En référence aux figures 13A et 13B, il est représenté un deuxième mode de libération de la timonerie 7. Selon ce deuxième mode de libération, celui-ci peut comprendre une étape de disposition du deuxième doigt radial 19 dans le logement 81 présent sur la deuxième face 87 de l'appendice 80. Ainsi, la clé de blocage 1 est maintenue dans l'ouverture traversante 55 portée par l'appendice 80.

Cette libération est réalisée de préférence une fois que la timonerie 7 est installée sur le véhicule automobile. Avantageusement, la libération de la timonerie 7 ne nécessite aucun outil. Par ailleurs, cette libération se fait par une simple rotation. Ainsi, cette libération est simple et peut être aisément réalisée.

En référence aux figures 14A et 14B, il est partiellement représenté la timonerie 7 installée sur le véhicule automobile à l'aide de vis de fixation 97. La clé de blocage 1 peut rester sur la manivelle 5 (figure 14A) ou sur l'appendice 80 (figure 14B) après libération de la timonerie 7 car la bielle 3 ne peut pas entrer en contact avec cette clé de blocage 1 lors de son déplacement en translation. Avantageusement, le fait de laisser la clé de blocage 1 sur la manivelle 5 ou sur l'appendice 80 permet de bloquer de nouveau la timonerie 7 si nécessaire ultérieurement et permet de limiter la production de déchets liée à l'installation de cette timonerie 7 sur le véhicule automobile.

Les différents modes de réalisation développés ci-dessus sont fournis à titre illustratif et non limitatif. En effet, il est tout à fait possible pour l'homme de l'art de modifier la forme de l'ouverture traversante 55, ou encore la structure de la clé de blocage 1 sans sortir du cadre de la présente invention. Par ailleurs, l'homme de l'art pourra utiliser d'autre matériaux constitutifs de la la clé de blocage 1 que ceux décrits dans les exemples précédents sans sortir du cadre de la présente description. Par ailleurs, l'homme de l'art pourra retirer la clé de blocage 1 de la timonerie 7 après libération de la bielle 3 sans sortir du cadre de la présente description.

Les premier et deuxième doigts radiaux s'étendent par exemple dans la même direction ou dans des directions opposées, c'est-à-dire formant un angle de 180°. Dans une variante les premier et deuxième doigts radiaux s'étendent dans des directions formant un angle non nul, de préférence différent de 90°. De même la longueur du premier doigt radial est supérieure à la longueur du deuxième doigt radial, sans que cette caractéristique soit limitative de l'invention.

En outre, de façon non limitative, les directions du premier doigt radial et de l'excroissance radiale de préhension peuvent former un angle alpha non nul, comme illustré par exemple à la figure 7B. Alternativement, le premier doigt radial et l'excroissance radiale de préhension peuvent s'étendre dans la même direction, nul, comme illustré par exemple à la figure 9.

Ainsi, le maintien en place d'une timonerie 7 dans une position de transport est possible grâce à la clé de blocage 1 décrite précédemment. Avantageusement, la clé de blocage 1 est installée sur la timonerie 7 sans nécessiter d'outils et la libération de la timonerie 7 est également possible sans nécessiter d'outils. Par ailleurs, l'utilisation d'une telle clé de blocage 1 permet de limiter les déchets à traiter du fait que celle-ci peut rester sur la timonerie 7 après son installation sur le véhicule automobile.

## Revendications

1. Clé de blocage (1) en position d'une bielle (3) comportant un profilé en U et d'une manivelle (5) d'une timonerie (7) d'un mécanisme d'essuyage dans une position de transport, **caractérisée en ce qu'**elle comprend :
• un axe (11) présentant à une extrémité une excroissance radiale de préhension (13) et à l'autre extrémité une tête élargie (15) destinée à coopérer avec une partie creuse du profilé en U formant la bielle (3), et
• un premier doigt radial (17) configuré pour se loger dans une fente de blocage (33) de la bielle (3) dans la position de transport.

2. Clé de blocage (1) selon la revendication précédente **caractérisée en ce que** la tête élargie (15) présente une forme générale cylindrique dont le diamètre (D) correspond à la distance entre les branches (32) du profilé en U de la bielle (3).

3. Clé de blocage (1) selon l'une quelconque des revendications précédentes, **caractérisée en ce qu'**elle comprend en outre un deuxième doigt radial (19) notamment configuré pour coopérer avec un bord de la manivelle (5) disposé en regard de la bielle (3) lorsque la bielle (3) et la manivelle (5) de la timonerie (7) sont dans la position de transport.

4. Clé de blocage (1) selon l'une quelconque des revendications précédentes, **caractérisée en ce que** l'excroissance radiale de préhension (13) comprend une surface de butée (21), en particulier une surface supérieure, notamment destinée à coopérer avec une face (51) de la manivelle (5) opposée à une face disposée en regard de la bielle (3).

5. Clé de blocage (1) selon l'une quelconque des revendications précédentes prise en combinaison avec la revendication 3, **caractérisée en ce qu'**elle comprend en outre un second premier doigt radial (17'), notamment disposé symétriquement au premier doigt radial (17) par rapport à l'axe (11) et/ou un second deuxième doigt radial (19'), notamment disposé symétriquement au deuxième doigt radial (19) par rapport à l'axe (11).

6. Clé de blocage (1) selon la revendication 3, **caractérisée en ce que** le deuxième doigt radial (19) est disposé au niveau d'une extrémité de l'excroissance radiale de préhension (13) disposée en regard de la tête élargie (15), ledit deuxième doigt radial (19) et ladite extrémité de l'excroissance radiale de préhension (13) étant configurés pour coopérer avec une face (87) d'un palier (91) disposée à l'opposé d'une face (85) disposée en regard de la bielle (3).

7. Sous-ensemble d'une timonerie (9) d'un mécanisme d'essuyage comprenant :
• un palier (91),
• une manivelle (5) articulée sur le palier (91), ladite manivelle (5) présentant une première extrémité (5a) reliée au palier (91) et une deuxième extrémité (5b) portant une liaison rotule (93), et
• une bielle (3) dont une extrémité est reliée par la liaison rotule (93) à la manivelle (5)
**caractérisé en ce que** la manivelle (5) ou le palier (91) présente une ouverture traversante (55), notamment allongée, configurée pour recevoir une clé de blocage (1) selon l'une quelconque des revendications précédentes, et **en ce que** la bielle (3) comporte un profilé en U présentant une fente de blocage (33) destinée à recevoir le premier doigt radial (17) de la clé de blocage (1).

8. Sous-ensemble de timonerie (9) selon la revendication précédente, **caractérisé en ce que** l'ouverture traversante (55) comporte une première partie (55a) destinée à recevoir l'axe (11) de la clé de blocage (1) et une deuxième partie (55b) oblongue configurée pour laisser passer l'excroissance radiale de préhension (13) et bloquer le passage du premier doigt radial (17) du fait de sa plus grande longueur (L).

9. Sous-ensemble de timonerie (9) selon l'une quelconque des revendications 7 ou 8, **caractérisé en ce que** l'ouverture traversante (55) est portée par la manivelle (5) et **en ce que** la manivelle (5) présente une face (51) opposée à celle disposée en regard de la bielle (3) et comprenant deux butées (57) configurées pour coopérer avec au moins une surface de butée (21) de l'excroissance radiale de préhension (13) afin de limiter le mouvement rotatif de la clé de blocage (1) lorsque cette clé de blocage (1) est dans une position de verrouillage.

10. Sous-ensemble de timonerie (9) selon la revendication précédente, **caractérisé en ce que** l'ouverture traversante (55) est disposée à proximité d'un fût (95) permettant l'articulation de la manivelle (5) sur le palier (91).

11. Sous-ensemble de timonerie (9) selon l'une des revendications 7 ou 8, **caractérisé en ce que** le palier (91) présente un appendice (80) disposé à l'opposé de la liaison rotule (93) lorsque la timonerie (7) est dans la position de transport, et **en ce que** l'appendice (80) présente l'ouverture traversante (55).

12. Sous-ensemble de timonerie (9) selon la revendication précédente, **caractérisé en ce que** l'ouverture traversante (55) présente une troisième partie (55c) correspondant à une fente disposée au niveau de la première partie (55a) et s'étendant perpendiculairement à cette première partie (55a), ladite troisième partie (55c) étant configurée pour permettre le passage du deuxième doigt radial (19).

13. Sous-ensemble de timonerie (9) selon l'une quelconque des deux revendications précédentes, caractérisé en ce l'appendice (80) présente un logement (81) disposé sur une face (87) opposée à une face (85) disposée en regard de la bielle (3), ledit logement (81) étant configuré pour coopérer avec le deuxième doigt radial (19) lorsque la clé de blocage (1) est dans une position déverrouillée, de manière à maintenir cette clé de blocage (1) en place.

14. Timonerie (7) d'un mécanisme d'essuyage **caractérisée en ce qu'**elle comprend un premier (9) et un deuxième (9') sous-ensembles de timonerie reliés entre eux par une bielle (3), **en ce qu'**au moins un des premier (9) et deuxième (9') sous-ensembles de timonerie (9) est un sous-ensemble de timonerie (9) selon l'une des revendications 7 à 13, ledit au moins un des premier (9) et deuxième (9') sous-ensembles de timonerie est agencé pour être bloqué dans la position de transport de la timonerie (7) à l'aide de la clé de blocage (1).

15. Procédé de mise en place dans une position de verrouillage d'une clé de blocage (1) selon l'une quelconque des revendications 1 à 6 sur un sous-ensemble de timonerie (9) selon l'une quelconque des revendications 7 à 13 afin de bloquer le sous-ensemble de timonerie dans la position de transport, **caractérisé en ce qu'**il comprend au moins une des étapes suivantes :
• (a) rotation de la bielle (3) autour de la liaison rotule (93) afin de positionner le sous-ensemble de timonerie dans la position de transport, et
• (b) pression sur la clé de blocage (1) au niveau de l'excroissance radiale de préhension (13) de manière à permettre l'insertion de la tête élargie (15) à l'intérieur du profilé en U de la bielle (3), et
• (c) rotation de la clé de blocage (1) de manière à ce que le premier doigt radial (17) entre dans la fente de blocage (33) portée par la bielle (3).

## Patentansprüche

1. Positionsblockierschlüssel (1) einer Schubstange (3), die ein U-förmiges Profil aufweist, und einer Kurbel (5) eines Gestänges (7) eines Wischmechanismus in einer Transportstellung, **dadurch gekennzeichnet, dass** er enthält:
• eine Achse (11), die an einem Ende einen radialen Greiffortsatz (13) und am anderen Ende einen verbreiterten Kopf (15) aufweist, der dazu bestimmt ist, mit einem hohlen Teil des die Schubstange (3) bildenden U-förmigen Profils zusammenzuwirken, und
• einen ersten radialen Finger (17), der konfiguriert ist, sich in einen Blockierschlitz (33) der Schubstange (3) in der Transportstellung einzufügen.

2. Blockierschlüssel (1) nach dem vorhergehenden Anspruch, **dadurch gekennzeichnet, dass** der verbreiterte Kopf (15) eine allgemein zylindrische Form hat, deren Durchmesser (D) dem Abstand zwischen den Schenkeln (32) des U-förmigen Profils der Schubstange (3) entspricht.

3. Blockierschlüssel (1) nach einem der vorhergehenden Ansprüche, **dadurch gekennzeichnet, dass** er außerdem einen zweiten radialen Finger (19) enthält, der insbesondere konfiguriert ist, mit einem Rand der Kurbel (5) zusammenzuwirken, der gegenüber der Schubstange (3) angeordnet ist, wenn die Schubstange (3) und die Kurbel (5) des Gestänges (7) in der Transportstellung sind.

4. Blockierschlüssel (1) nach einem der vorhergehenden Ansprüche, **dadurch gekennzeichnet, dass** der radiale Greiffortsatz (13) eine Anschlagfläche (21), insbesondere eine obere Fläche, enthält, die insbesondere dazu bestimmt ist, mit einer Seite (51) der Kurbel (5) entgegengesetzt zu einer Seite zusammenzuwirken, die gegenüber der Schubstange (3) angeordnet ist.

5. Blockierschlüssel (1) nach einem der vorhergehenden Ansprüche in Kombination mit Anspruch 3, **dadurch gekennzeichnet, dass** er außerdem einen zweiten ersten radialen Finger (17'), der insbesondere symmetrisch zum ersten radialen Finger (17) bezüglich der Achse (11) angeordnet ist, und/oder einen zweiten zweiten radialen Finger (19') enthält, der insbesondere symmetrisch zum zweiten radialen Finger (19) bezüglich der Achse (11) angeordnet ist.

6. Blockierschlüssel (1) nach Anspruch 3, **dadurch gekennzeichnet, dass** der zweite radiale Finger (19) im Bereich eines Endes des radialen Greiffortsatzes (13) angeordnet ist, das gegenüber dem verbreiterten Kopf (15) angeordnet ist, wobei der zweite radiale Finger (19) und das Ende des radialen Greiffortsatzes (13) konfiguriert sind, mit einer Seite (87) eines Lagers (91) zusammenzuwirken, die entgegengesetzt zu einer Seite (85) angeordnet ist, die gegenüber der Schubstange (3) angeordnet ist.

7. Teileinheit eines Gestänges (9) eines Wischmechanismus, die enthält:
• ein Lager (91),
• eine an das Lager (91) angelenkte Kurbel (5), wobei die Kurbel (5) ein mit dem Lager (91) verbundenes erstes Ende (5a) und ein eine Kugelgelenkverbindung (93) tragendes zweites Ende (5b) aufweist, und
• eine Schubstange (3), von der ein Ende durch die Kugelgelenkverbindung (93) mit der Kurbel (5) verbunden ist,
**dadurch gekennzeichnet, dass** die Kurbel (5) oder das Lager (91) eine insbesondere längliche Durchgangsöffnung (55) aufweist, die konfiguriert ist, einen Blockierschlüssel (1) nach einem der vorhergehenden Ansprüche aufzunehmen, und dass die Schubstange (3) ein U-förmiges Profil aufweist, das einen Blockierschlitz (33) aufweist, der dazu bestimmt ist, den ersten radialen Finger (17) des Blockierschlüssels (1) aufzunehmen.

8. Gestänge-Teileinheit (9) nach dem vorhergehenden Anspruch, **dadurch gekennzeichnet, dass** die Durchgangsöffnung (55) einen ersten Teil (55a), der dazu bestimmt ist, die Achse (11) des Blockierschlüssels (1) aufzunehmen, und einen zweiten länglichen Teil (55b) aufweist, der konfiguriert ist, den radialen Greiffortsatz (13) durchzulassen und den Durchgang des ersten radialen Fingers (17) aufgrund seiner größeren Länge (L) zu blockieren.

9. Gestänge-Teileinheit (9) nach einem der Ansprüche 7 oder 8, **dadurch gekennzeichnet, dass** die Durchgangsöffnung (55) von der Kurbel (5) getragen wird, und dass die Kurbel (5) eine Seite (51) aufweist, die derjenigen entgegengesetzt ist, die gegenüber der Schubstange (3) angeordnet ist, und die zwei Anschläge (57) enthält, die konfiguriert sind, mit mindestens einer Anschlagfläche (21) des radialen Greiffortsatzes (13) zusammenzuwirken, um die Drehbewegung des Blockierschlüssels (1) zu begrenzen, wenn dieser Blockierschlüssel (1) in einer Verriegelungsstellung ist.

10. Gestänge-Teileinheit (9) nach dem vorhergehenden Anspruch, **dadurch gekennzeichnet, dass** die Durchgangsöffnung (55) in der Nähe eines Schafts (95) angeordnet ist, der die Gelenkverbindung der Kurbel (5) mit dem Lager (91) erlaubt.

11. Gestänge-Teileinheit (9) nach einem der Ansprüche 7 oder 8, **dadurch gekennzeichnet, dass** das Lager (91) einen Ansatz (80) aufweist, der entgegengesetzt zur Kugelgelenkverbindung (93) angeordnet ist, wenn das Gestänge (7) in der Transportstellung ist, und dass der Ansatz (80) die Durchgangsöffnung (55) aufweist.

12. Gestänge-Teileinheit (9) nach dem vorhergehenden Anspruch, **dadurch gekennzeichnet, dass** die Durchgangsöffnung (55) einen dritten Teil (55c) aufweist, der einem Schlitz entspricht, der im Bereich des ersten Teils (55a) angeordnet ist und sich lotrecht zu diesem ersten Teil (55a) erstreckt, wobei der dritte Teil (55c) konfiguriert ist, den Durchgang des zweiten radialen Fingers (19) zu erlauben.

13. Gestänge-Teileinheit (9) nach einem der zwei vorhergehenden Ansprüche, **dadurch gekennzeichnet, dass** der Ansatz (80) eine Aufnahme (81) aufweist, die auf einer Seite (87) entgegengesetzt zu einer gegenüber der Schubstange (3) angeordneten Seite (85) angeordnet ist, wobei die Aufnahme (81) konfiguriert ist, mit dem zweiten radialen Finger (19) zusammenzuwirken, wenn der Blockierschlüssel (1) in einer entriegelten Stellung ist, um diesen Blockierschlüssel (1) an Ort und Stelle zu halten.

14. Gestänge (7) eines Wischmechanismus, **dadurch gekennzeichnet, dass** es eine erste (9) und eine zweite (9') Gestänge-Teileinheit enthält, die durch eine Schubstange (3) miteinander verbunden sind, dass mindestens eine der ersten (9) und zweiten (9') Gestänge-Teileinheiten (9) eine Gestänge-Teileinheit (9) nach einem der Ansprüche 7 bis 13 ist, wobei die mindestens eine der ersten (9) und zweiten (9') Gestänge-Teileinheiten eingerichtet ist, um in der Transportstellung des Gestänges (7) mit Hilfe des Blockierschlüssels (1) blockiert zu werden.

15. Verfahren zum Anordnen eines Blockierschlüssels (1) nach einem der Ansprüche 1 bis 6 in einer Verriegelungsstellung auf einer Gestänge-Teileinheit (9) nach einem der Ansprüche 7 bis 13, um die Gestänge-Teileinheit in der Transportstellung zu blockieren, **dadurch gekennzeichnet, dass** es mindestens einen der folgenden Schritte enthält:
• (a) Drehen der Schubstange (3) um die Kugelgelenkverbindung (93), um die Gestänge-Teileinheit in der Transportstellung zu positionieren, und
• (b) Drücken auf den Blockierschlüssel (1) im Bereich des radialen Greiffortsatzes (13), um das Einführen des verbreiterten Kopfs (15) ins Innere des U-förmiges Profils der Schubstange (3) zu erlauben, und
• (c) Drehen des Blockierschlüssels (1), damit der erste radiale Finger (17) in den von der Schubstange (3) getragenen Blockierschlitz (33) eindringt.

## Claims

1. Key (1) for locking a link (3) including a U-section and a crank (5) of a linkage (7) of a wiper mechanism in a transport position, **characterized in that** it comprises:
• a shaft (11) having at one end a radial holding excrescence (13) and at the other end an enlarged head (15) intended to cooperate with a hollow part of the U-section forming the link (3), and
• a first radial finger (17) configured to be housed in a slot (33) for locking the link (3) in the transport position.

2. Locking key (1) according to the preceding claim **characterized in that** the enlarged head (15) has a cylindrical general shape the diameter (D) of which corresponds to the distance between the branches (32) of the U-section of the link (3) .

3. Locking key (1) according to any one of the preceding claims, **characterized in that** it further comprises a second radial finger (19) in particular configured to cooperate with an edge of the crank (5) disposed facing the link (3) when the link (3) and the crank (5) of the linkage (7) are in the transport position.

4. Locking key (1) according to any one of the preceding claims, **characterized in that** the radial holding excrescence (13) comprises an abutment surface (21), in particular an upper surface, in particular intended to cooperate with a face (51) of the crank (5) opposite a face disposed facing the link (3).

5. Locking key (1) according to any one of the preceding claims in combination with Claim 3, **characterized in that** it further comprises a second first radial finger (17'), in particular disposed symmetrically with respect to the first radial finger (17) relative to the shaft (11) and/or a second second radial finger (19'), in particular disposed symmetrically with respect to the second radial finger (19) relative to the shaft (11).

6. Locking key (1) according to Claim 3, **characterized in that** the second radial finger (19) is disposed at the level of an end of the radial holding excrescence (13) disposed facing the enlarged head (15), said second radial finger (19) and said end of the radial holding excrescence (13) being configured to cooperate with a face (87) of a bearing (91) disposed opposite a face (85) disposed facing the link (3).

7. Subassembly (9) of a linkage of a wiper mechanism comprising:
• a bearing (91),
• a crank (5) articulated on the bearing (91), said crank (5) having a first end (5a) connected to the bearing (91) and a second end (5b) carrying a ball-joint (93), and
• a link (3) one end of which is connected by the ball joint (93) to the crank (5)
**characterized in that** the crank (5) or the bearing (91) includes an in particular elongate through-opening (55) configured to receive a locking key (1) according to any one of the preceding claims, and **in that** the link (3) includes a U-section including a locking slot (33) intended to receive the first radial finger (17) of the locking key (1).

8. Subassembly according to the preceding claim of a linkage (9), **characterized in that** the through-opening (55) includes a first part (55a) intended to receive the shaft (11) of the locking key (1) and an oblong second part (55b) configured to allow the radial holding excrescence (13) to pass and to block the passage of the first radial finger (17) because of its greater length (L).

9. Linkage subassembly (9) according to either one of Claims 7 or 8, **characterized in that** the through-opening (55) is in the crank (5) and **in that** the crank (5) has a face (51) opposite that disposed facing the link (3) and comprising two abutments (57) configured to cooperate with at least one abutment surface (21) of the radial holding excrescence (13) in order to limit the rotary movement of the locking key (1) when that locking key (1) is in a locking position.

10. Linkage subassembly (9) according to the preceding claim, **characterized in that** the through-opening (55) is disposed in the vicinity of a bush (95) enabling the articulation of the crank (5) on the bearing (91).

11. Linkage subassembly (9) according to either one of Claims 7 or 8, **characterized in that** the bearing (91) has an appendix (80) disposed opposite the ball joint (93) when the linkage (7) is in the transport position and **in that** the appendix (80) includes the through-opening (55).

12. Linkage subassembly (9) according to the preceding claim, **characterized in that** the through-opening (55) includes a third part (55c) corresponding to a slot disposed at the level of the first part (55a) and extending perpendicularly to that first part (55a), said third part (55c) being configured to allow the second radial finger (19) to pass.

13. Linkage subassembly (9) according to either one of the preceding two claims, **characterized in that** the appendix (80) includes a housing (81) disposed on a face (87) opposite a face (85) disposed facing the link (3), said housing (81) being configured to cooperate with the second radial finger (19) when the locking key (1) is in an unlocked position so as to hold that locking key (1) in place.

14. Linkage (7) of a wiper mechanism **characterized in that** it comprises a first linkage subassembly (9) and a second linkage subassembly (9') connected to one another by a link (3), **in that** the first linkage subassembly (9) and/or the second linkage subassembly (9') is a linkage subassembly (9) according to any one of Claims 7 to 13, said first linkage subassembly (9) and/or said second linkage subassembly (9') is adapted to be locked in the transport position of the linkage (7) with the aid of the locking key (1).

15. Method of placing in a locking position a locking key (1) according to any one of Claims 1 to 6 on a linkage subassembly (9) according to any one of Claims 7 to 13 in order to lock the linkage subassembly in the transport position, **characterized in that** it comprises at least one of the following steps:
• (a) rotating the link (3) around the ball joint (93) in order to position the linkage subassembly in the transport position, and
• (b) pressing on the locking key (1) at the level of the radial holding excrescence (13) so as to enable insertion of the enlarged head (15) in the U-section of the link (3), and
• (c) rotating the locking key (1) so that the first radial finger (17) enters the locking slot (33) on the link (3).
